# DEMANDE DE BREVET EUROPEEN

(11) **EP 1 775 198 A2**
(43) Date de publication de la demande: **18.04.2007**
(21) Numéro de dépôt: 06300962.5
(22) Date de dépôt: 19.09.2006
(51) Int. Cl.: B62D 25/04, B62D 29/00

(54) **Procédé de réalisation d'une structure de véhicule automobile**

(30) Priorité: 13.10.2005 FR 0553113
(71) Demandeur: PEUGEOT CITROËN AUTOMOBILES S.A., 78140 Velizy Villacoublay (FR)
(72) Inventeur: Cornière, Eric, 78640 Neauphle Le Château (FR)

(57) **Abrégé**

L'invention concerne un procédé de réalisation d'une structure de véhicule automobile (1) comprenant une étape de fabrication des différents éléments de structure (3), une étape de fabrication d'au moins un organe de renfort (2), une étape de fabrication d'organes de maintien (4), une étape d'assemblage et de soudage des éléments de structure (3) entre-eux afin de fabriquer une caisse du véhicule.

Le procédé de l'invention est remarquable en ce qu'il comprend une étape de fabrication d'un moyen faisant entretoise (5), une étape de fabrication de modules de renfort (2, 4 ; 2) comportant au moins un organe de renfort (2), une étape de fabrication de modules de support (3, 5 ; 3, 4, 5), une étape d'assemblage isostatique des modules de renfort (2, 4 ; 2) et de support (3, 5 ; 3, 4, 5) entre-eux, et une étape d'assemblage hyperstatique des modules de renfort et de support entre-eux.

## Description

L'invention se rapporte à un procédé de réalisation d'une structure de véhicule automobile.

L'invention concerne plus particulièrement un procédé de réalisation d'une structure de véhicule automobile comportant au moins un élément de renfort rapporté rigidifiant la structure, par exemple localement. Plus précisément, l'invention concerne un procédé de réalisation d'un montant de baie et/ou d'un pied avant comportant un tel élément de renfort.

Il est connu de rigidifier une structure de véhicule automobile en utilisant des moyens de renfort, tels des tubes de renfort, disposés au niveau de zones de la structure qui sont sensibles à la déformation lors de chocs du véhicule. Ainsi, il est par exemple connu d'agencer un tube de renfort sur une zone de montant de baie afin de rigidifier les montants latéraux de baie. Le degré de rigidification de la structure du véhicule est une donnée très importante qu'il ne faut pas négliger pour répondre aux normes de sécurité.

Pour cela, il est notamment procédé à l'agencement d'au moins un élément de renfort 2 rapporté puis solidarisé à la structure 3 du véhicule. Une telle rigidification est préconisée afin d'éviter l'écrasement dudit montant de baie lorsque le véhicule se retourne mais aussi afin de répartir les efforts engendrés par un choc à l'ensemble des éléments de structure environnant. En fait, il est connu d'assembler un tube de renfort entre une âme de montant de baie et une doublure de montant de baie, à savoir entre deux pièces de la structure du véhicule. Cet assemblage est réalisé lors d'une préparation de ferrage afin de constituer un sous ensemble de pièces qui est destiné à coopérer en partie avec un pied avant de la structure du véhicule.

Etant donné que le tube de renfort ne doit pas se déformer en cas de choc, il est donc réalisé dans un matériau hautement résistant à la déformation. Il pourrait être réalisé dans un matériau de moindre dureté mais au détriment de sa section. Afin de rendre discret la présence d'un tel tube de renfort, voire dans l'optique de rendre le plus gracieux possible la forme du montant de baie, il est préférée l'utilisation d'un tube de renfort de section contenue réalisé par exemple en acier trempé contenant du bore. Pour cela, il faut également que le tube de renfort soit sensiblement de forme complémentaire à l'ensemble constitué du montant de baie et du pied avant.

Compte tenu de la difficulté qu'il y a de conformer un tel tube aux formes définies par celles de la structure du véhicule leur montage sur la structure du véhicule est parfois imprécis. En effet, de tels tubes ont des indices de tolérance de fabrication importants de sorte que les jeux de montage qui sont requis pour leur mise en place et leur assemblage sur la structure sont conséquents, voire de l'ordre d'environ 5 millimètres en périphérie du tube, qui est une valeur très élevée dans le domaine de l'automobile.

Bien entendu, de tels tubes sont rendus en partie solidaire de la structure du véhicule par l'intermédiaire de cordons de soudure orientés selon des lignes de jonctions présentent entre la structure et chaque tube de renfort et qui s'étendent de manière sensiblement parallèle à l'axe du tube.

La demanderesse a constaté que de tels jeux de montage ne permettent pas au tube de transmettre, de façon optimale, les efforts d'un choc à la structure. En effet, outres les cordons de soudure qui permettent à chaque tube de transmettre à la structure les composantes longitudinales des efforts d'un choc, les jeux de montages en périphérie du tube ne permettent pas de transmettre l'intégralité des composantes des efforts d'un choc à la structure. Par conséquent, la présence de ces jeux de montages pénalise lourdement la prestation du véhicule vis à vis de la tenue aux chocs.

La présente invention a trait à un procédé de réalisation d'une structure de véhicule automobile comprenant une étape de fabrication des différents éléments de structure, une étape de fabrication d'au moins un organe de renfort, une étape de fabrication d'organes de maintien, une étape d'assemblage et de soudage des éléments de structure entre-eux afin de fabriquer une caisse du véhicule.

Un but de la présente invention est de pallier tout ou partie des inconvénients de l'art antérieur relevés ci-dessus.

A cette fin, le procédé selon l'invention, par ailleurs conforme à la définition générique qu'en donne le préambule ci-dessus, est essentiellement caractérisé en ce que qu'il comprend une étape de fabrication d'un moyen faisant entretoise, une étape de fabrication de modules de renfort comportant au moins un organe de renfort, une étape de fabrication de modules de support, une étape d'assemblage isostatique des modules de renfort et de support entre-eux, et une étape d'assemblage hyperstatique des modules de renfort et de support entre-eux.

Par ailleurs, l'invention peut comporter l'une ou plusieurs des étapes suivantes :
- l'étape de fabrication du moyen faisant entretoise consiste en une découpe d'une plaque de matière expansible sous l'effet de la chaleur de sorte que la matière passe d'un premier état solide ayant une faible épaisseur à un second état solide ayant une plus grande épaisseur,
- l'étape de fabrication d'un module de support consiste d'abord en une opération d'assemblage du moyen faisant entretoise sur au moins un organe de maintien, puis en une opération d'assemblage de l'ensemble ainsi constitué dudit moyen faisant entretoise et d'au moins un organe de maintien sur les éléments de structure de la caisse du véhicule,
- l'étape d'assemblage isostatique des modules de renfort et de support entre-eux consiste en une opération de montage de l'organe de renfort sur le module de support composé d'au moins l'un des éléments de structure, l'organe de maintien et ledit moyen faisant entretoise, puis en une opération de liaison isostatique de l'organe de renfort sur tout ou partie du module de support consistant à souder une partie de l'organe de renfort sur l'un des éléments de structure,
- l'étape d'assemblage hyperstatique des modules de renfort et de support consiste à mettre en température, selon une gamme pré-établie, tout ou partie de la structure du véhicule munie du module de renfort assemblé sur le module de support, afin d'expandre ledit moyen faisant entretoise au travers de jeux de montage présents entre l'organe de renfort et l'organe de maintien, ledit moyen faisant entretoise étant ainsi apte à créer une liaison encastrement entre l'organe de renfort et l'organe de maintien.

Selon une variante de réalisation de la structure du véhicule, le procédé de l'invention peut comporter l'une ou plusieurs des étapes suivantes :
- l'étape de fabrication de modules de renfort consiste en une opération d'assemblage entre au moins un organe de renfort et un organe de maintien,
- l'étape de fabrication d'un module de support consiste en une opération d'assemblage du moyen faisant entretoise sur au moins un élément de structure,
- l'étape d'assemblage isostatique des modules de renfort et de support entre-eux consiste en une opération de montage du module de renfort, composé de l'organe de renfort et de l'organe de maintien, sur le module de support composé d'au moins un des éléments de structure et dudit moyen faisant entretoise, puis en une opération de liaison isostatique du module de renfort sur le module de support consistant à souder une partie de l'organe de renfort sur l'un des éléments de structure,
- l'étape d'assemblage hyperstatique des modules de renfort et de support consiste à mettre en température, selon une gamme pré-établie, tout ou partie de la structure du véhicule munie du module de renfort assemblé sur le module de support, afin d'expandre ledit moyen faisant entretoise au travers de jeux de montage présents entre l'élément de structure et l'organe de maintien, ledit moyen faisant entretoise étant ainsi apte à créer une liaison encastrement entre l'élément de structure et l'organe de maintien.

D'autres particularités et avantages apparaîtront à la lecture de la description ci-après faite, donnée à titre d'exemple et de manière non limitative, en référence aux figures dans lesquelles :
- la figure 1 est une vue en perspective d'un véhicule automobile qui représente schématiquement l'agencement d'un élément de renfort sur la structure du véhicule, selon l'invention,
- la figure 2 est un agrandissement isolant une partie de la structure de la figure 1 vue de l'intérieure du véhicule, représentant un montant de baie supportant un élément de renfort,
- la figure 3 est une vue en détail de la partie supérieure du montant de baie de la figure 2, dans laquelle est notamment représenté un organe de support, un moyen faisant entretoise et une extrémité de l'élément de renfort,
- la figure 4 est une vue en coupe selon A-A de la figure 3,
- la figure 5 est une vue en perspective d'un organe de maintien de l'élément de renfort situé en partie inférieure de la figure 2,
- la figure 6 est une vue en coupe selon B-B de la figure 5,
- la figure 7 est un graphique concernant des gammes de température et de temps nécessaires à l'expansion d'un moyen faisant entretoise.

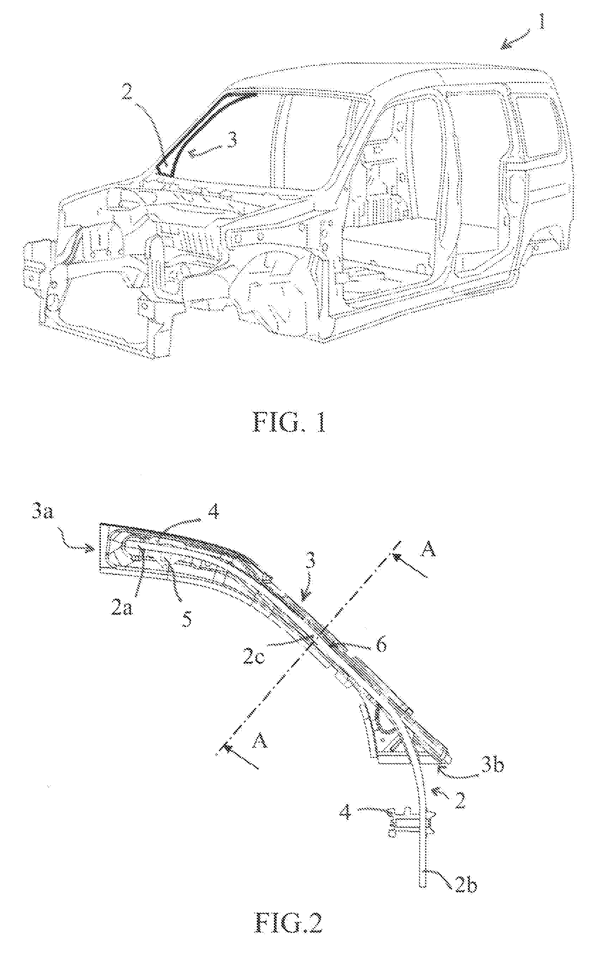

Une structure de véhicule automobile 1, telle qu'illustrée en figure 1, est réalisée selon un procédé comportant, en premier lieu, une étape de fabrication des différents éléments 3 de structure, sur lesquels sont notamment montés des éléments de carrosserie non représentés.

Puis, l'une des étapes du procédé consiste en une opération d'assemblage des différents éléments 3 de structure entre-eux, puis en une opération de soudage, par exemple par points, afin de créer une structure rigide, parfois dite caisse du véhicule. En grande série, ces opérations dites de ferrage ont traditionnellement lieu sur des chaînes de ferrage.

Outre leur utilisation en tant qu'éléments de structure constitutifs de la caisse du véhicule automobile, ces mêmes éléments 3 de structure peuvent également faire office - de modules de support à des modules de renfort qui comprennent, par exemple, au moins un organe de renfort 2.

En effet, il est parfois nécessaire de recourir à une rigidification localisée de la structure du véhicule en ajoutant un organe de renfort. A titre d'exemple, il est connu d'ajouter sur chaque ensemble d'éléments de structure disposé de part et d'autre des bords latéraux d'un pare-brise, un tube de renfort 2. Un tel organe de renfort est avantageusement destiné à augmenter la rigidité de l'ensemble d'éléments de structure correspondant. De la sorte, les efforts engendrés par un choc sont répartis sur des parties déterminées de la structure du véhicule. Ainsi, les efforts engendrés par un choc extérieur, par exemple un choc frontal, peuvent être transmis des montants de baie à chaque pied central de la caisse, limitant ainsi leur transmission sur la porte disposée en partie avant, entre un montant de pare-brise et le pied central.

La présence d'un tel organe de rigidification permet ainsi de limiter la déformation de la porte, augmentant par conséquent la sécurité des occupants du véhicule.

Afin de répondre à cet objectif sécuritaire, le procédé de réalisation de la structure comprend une étape de fabrication d'organes de renfort 2, basée principalement sur une opération de conformage à chaud d'un tube qui, au vu de sa fonction, est parfois nommé tube de renfort. Le tube de renfort 2 est de préférence de forme cylindrique à ses extrémités et de forme ovale en son milieu, et est agencé au niveau d'une ouverture ménagée entre des éléments de structure, tels deux pièces de tôlerie assemblées ensemble, comme une doublure de montant de baie et une âme de montant de baie.

Au vu des jeux de montages relevés entre le module de renfort et le module de support, lesquels sont en partie dus à la tolérance de fabrication accordée au tube de renfort, le procédé de réalisation de la structure du véhicule comprend une étape supplémentaire dédiée à l'assemblage isostatique des modules de renfort et de support entre-eux, qui consiste d'abord à monter ledit module de renfort sur ledit module de support, puis à appliquer des cordons de soudures entre lesdits modules de renfort et de support, au niveau de lignes de jointure entre ces deux modules.

Puis, une étape supplémentaire du procédé de réalisation d'une structure de véhicule automobile consiste en l'assemblage hyperstatique des modules de renfort et de support. Pour cela, le procédé prévoit au préalable de cette étape, une étape supplémentaire de fabrication d'un moyen faisant entretoise 5 qui consiste principalement en une découpe d'une plaque d'une matière expansible sous l'effet de la chaleur, de sorte que cette plaque passe d'un premier état solide ayant une faible épaisseur à un second état solide ayant une plus grande épaisseur. Cette plaque se compose d'une matière alvéolaire, telle une mousse structurale, présentant une valeur d'expansion prédéterminée sous l'effet de la chaleur.

Bien entendu, l'un des avantages premier du procédé de l'invention est de permettre une expansion de la mousse structurale en ligne de fabrication, c'est en dire par un passage de tout ou partie de la caisse du véhicule automobile dans un four, après une opération de traitement électrolytique de la caisse. Pour cela, le procédé est remarquable en ce qu'il permet de lier de manière hyperstatique lesdits modules de renfort et de support entre-eux, c'est-à-dire en obtenant une liaison encastrement entre ses modules, par une étape de mise en température de tout ou partie de la structure du véhicule afin d'expandre ledit moyen faisant entretoise 5 au travers des jeux de montages.

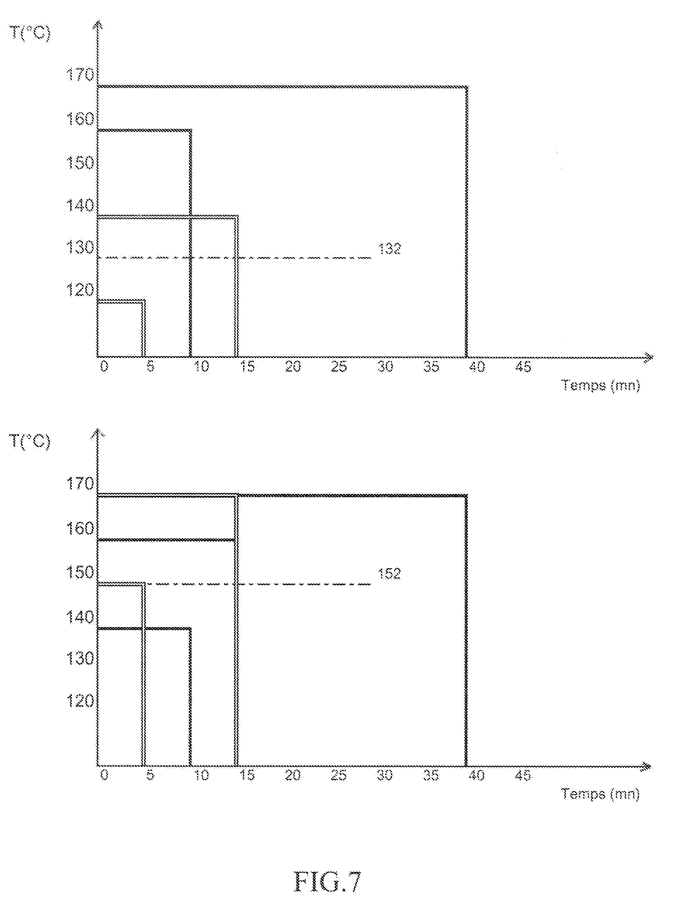

Ainsi, l'opération de mise en température consiste à appliquer notamment audit moyen faisant entretoise 5 une température comprise, par exemple, entre 120°C et 170°C durant une période comprise, par exemple, entre 5 et 40 minutes (Cf. FIG.7).

En tenant compte du matériau utilisé dans le fabrication dudit moyen faisant entretoise 5, l'opération de mise en température s'effectue plus particulièrement selon soit un premier pallier de température compris entre 120°C et 140°C, de préférence 135°C, durant une période de 5 à 15 minutes, de préférence 12 minutes, soit un second pallier de température compris entre 140°C et 160°C, de préférence 140°C, durant une période de 5 à 10 minutes, de préférence 7 minutes, soit un troisième pallier de température à 132°C durant une période de 30 minutes.

Selon un autre matériau utilisé dans le fabrication dudit moyen faisant entretoise 5, l'opération de mise en température s'effectue plus particulièrement selon soit un premier pallier de température compris entre 150°C et 170°C, de préférence 165°C, durant une période de 5 à 15 minutes, de préférence 10 minutes, soit un second pallier de température compris entre 140°C et 160°C, de préférence 150°C, durant une période de 10 à 15 minutes, de préférence 13 minutes, soit un troisième pallier de température à 152°C durant une période de 30 minutes.

L'application de ces gammes de température et de temps garantie une expansion suffisante dudit moyen faisant entretoise, de sorte à combler les jeux de montage. En effet, des telles consignes permettent une expansion d'environ 80% de la mousse structurale 5, de sorte que pour un jeu de montage de l'ordre de 3 millimètres, une mousse d'épaisseur initiale 5 millimètres dans son premier état solide, a une épaisseur finale augmentée de 4 millimètres, soit 1 millimètre de plus que le jeu de montage 7 à combler entre lesdits modules de support et de renfort.

Bien entendu, ledit moyen faisant entretoise 5 se solidifie à température ambiante de sorte à créer une très bonne rigidité entre lesdits modules de support et de renfort.

Le procédé est avantageux en ce qu'il permet de réaliser plusieurs types de structure du véhicule, selon la nature même des modules de support et de renfort.

En effet, selon un mode de réalisation préféré d'une structure du véhicule, le procédé de réalisation de cette dernière comprend une étape de fabrication d'un module de support comportant notamment un élément de structure 3, un organe de maintien 4 et un moyen faisant entretoise 5, qui sera suivie d'une étape d'assemblage isostatique entre le module de support ainsi composé et un module de renfort constitué uniquement par au moins un tube de renfort 2, puis d'une étape d'assemblage hyperstatique des modules de renfort et de support entre-eux.

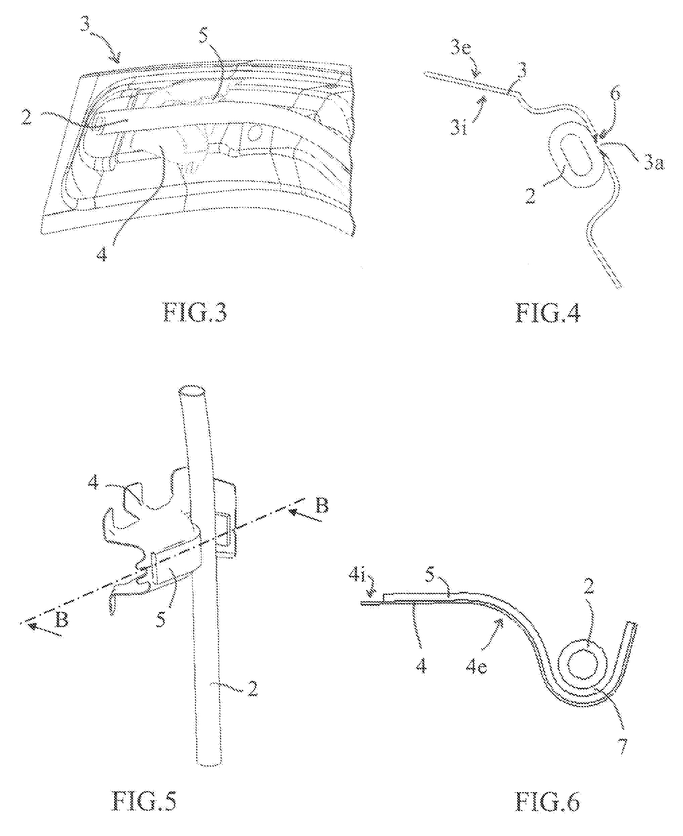

En fait, le procédé de fabrication du module de support consiste plus particulièrement en, d'abord, une opération d'assemblage du moyen faisant entretoise 5 sur une des faces de l'organe de maintien 4 qui a été préalablement fabriqué en emboutissage. L'assemblage entre la plaque 5 et l'organe 4 est réalisé selon une opération de collage d'une face collante de la plaque 5 sur une face 4i de l'organe de maintien 4. La face 4i de l'organe 4 ainsi concernée par la pose d'une plaque de mousse structurale 5 se trouve être la face dirigée vers le tube de renfort 2, qui est de forme concave et complémentaire au tube (Cf. FIG.5 et 6). Une fois cet assemblage réalisé entre l'organe de maintien 4 et la plaque 5, le procédé de fabrication du module de support comprend une opération d'assemblage de l'ensemble composé de l'organe 4 et de la plaque 5 sur l'âme de montant de baie 3, de manière à mettre une partie de la face extérieure 4e de l'organe 4 sur la face intérieure 3i de l'âme de montant de baie 3, puis à rendre solidaire l'organe 4 sur l'âme 3, par une opération de soudage par exemple.

Le procédé de réalisation de la structure du véhicule comprend ensuite une étape d'assemblage isostatique des modules de renfort et de renfort entre-eux qui consiste principalement en, d'abord, une opération de montage du tube de renfort 2 sur le module de support détaillé ci-dessus, puis en une opération de liaison isostatique du tube de renfort 2 sur une partie des éléments 3 de structure basée sur la réalisation de cordons de soudure 6 (Cf. FIG. 4) qui lient structurellement le tube 2 et l'élément 3. Pour cela, des ouvertures 3a sont ménagées localement sur l'âme 3 de montant de baie, et définissent un passage qui permet de relier les faces extérieure 3e et intérieure 3i entre-elles.

Le procédé comprend une dernière étape dite d'assemblage hyperstatique du tube de renfort 2 sur le module de support 3, 4 et 5 et qui consiste principalement en une mise en température de l'intégralité de la structure, voire uniquement de la partie de la structure comportant la plaque 5, afin de permettre à cette dernière de s'expandre. Pour cela, la mise en température consiste à suivre les gammes de température données précédemment.

Ainsi, dans ce mode de réalisation préférée de la structure du véhicule, la plaque de mousse structurale 5 se trouve sensiblement disposée entre une partie du tube 2 et chaque organe de maintien 4 de sorte que l'expansion de la mousse 5 de son premier état solide d'épaisseur initiale, à savoir environ 5 millimètres, à son second état solide d'épaisseur finale, à savoir environ 9 millimètres, permette de combler, le cas échéant, les jeux de montage entre le tube 2 et chaque organe de maintien 4, et de produire une liaison de type à encastrement entre ces deux éléments.

Dans une variante de réalisation de la structure, le procédé de l'invention comprend une étape de fabrication d'un module de renfort ne comportant pas uniquement le tube de renfort 2, mais un ensemble composé d'un tube 2 et un organe de maintien 4, une étape de fabrication d'un module de support comprenant au moins un élément de structure 3 et ledit moyen faisant entretoise 5, puis une étape d'assemblage isostatique entre les modules de support et de renfort ainsi créé, et enfin une étape d'assemblage hyperstatique des modules de renfort et de support entre-eux.

Ainsi, le procédé de fabrication du module de renfort consiste en une opération d'assemblage le tube de renfort 2, qui a été préalablement conformé aux dimensions et formes de l'ensemble d'éléments de structure 3 composé de l'âme de montant de baie 3 et d'un pied avant (non représenté) qui s'étend de manière sensiblement verticale au véhicule, sur l'organe de maintien 4 qui a été préalablement fabriqué en emboutissage. L'opération d'assemblage est principalement basée sur un montage par emmanchement en force du tube 2 sur l'organe de maintien 4 selon un gabarit prédéterminé. En fait, chaque organe de maintien 4 est placé à une distance donnée de chaque extrémité du tube.

Le procédé comprend également une étape de fabrication d'un module de support, réalisée de manière indépendante de l'étape de fabrication du module de renfort précédemment décrite, et qui consiste en une opération d'assemblage d'une plaque de mousse structurale 5 sur l'ensemble d'éléments de structure 3 composé par exemple de l'âme de montant de baie et du pied avant lorsque la rigidification recherchée touche les montants de baie disposés de chaque côté du pare-brise d'un véhicule automobile. Plus précisément, la présente opération d'assemblage est basée sur le collage de la plaque 5 sur une face intérieure 3i de l'âme de montant de baie 3 et une face intérieure de tout élément de structure coopérant avec un organe de maintien 4. De préférence, la plaque 5 est collée sur chaque élément de structure 3 sensiblement au droit de l'emplacement de l'organe de maintien 4. Ainsi, la plaque 5 se trouvera interposée entre la face intérieur 3i de l'élément de structure 3 et la face extérieure 4e de l'organe de maintien 4 du module de renfort détaillé ci-après, c'est-à-dire entre chaque âme de montant de baie 3 ou pied avant et chaque organe de maintien 4, de sorte à combler directement les jeux de montage entre l'organe de maintien 4 et l'élément de structure 3 sur lequel il doit être solidarisé.

Le procédé de réalisation de la variante comprend ensuite une étape d'assemblage isostatique de chaque module de renfort sur chaque module de support qui consiste principalement en une étape de montage du module de renfort constitué d'un tube de renfort 2 et de chaque organe de maintien 4, sur chaque module de support composé des éléments 3 de structure et de la plaque de mousse structurale 5, puis en une opération de liaison isostatique visant à souder le tube de renfort 2 du module de renfort sur un des éléments 3 de structure. De préférence, la liaison isostatique se compose de cordons de soudure réalisés le long des lignes de jointure entre une partie centrale 2c du tube de renfort 2 et l'élément de structure 3.

Pour finir, le procédé de réalisation de la variante comprend une dernière étape dite d'assemblage hyperstatique de chaque organe de maintien 4 et de chaque élément de structure 3, qui consiste principalement en une mise en température de l'intégralité de la structure, voire uniquement de la partie de la structure du véhicule comportant la plaque 5, afin de permettre à cette dernière de s'expandre. Pour cela, la mise en température consiste à suivre les gammes de températures données précédemment.

Ainsi, cette variante de réalisation de la structure du véhicule est caractérisée par la présence de la plaque de mousse structurale 5 sensiblement disposée entre tout ou partie des éléments de structure 3 et chaque organe de maintien 4 de sorte que l'expansion de la mousse 5 de son premier état solide d'épaisseur initiale, à savoir environ 5 millimètres, à son second état solide d'épaisseur finale, à savoir environ 9 millimètres, permette de combler, le cas échéant, les jeux de montage entre chaque élément de structure 3 et chaque organe de maintien 4, et de produire une liaison de type à encastrement entre ces deux éléments.

## Revendications

1. Procédé de réalisation d'une structure de véhicule automobile (1) comprenant une étape de fabrication des différents éléments de structure (3), une étape de fabrication d'au moins un organe de renfort (2), une étape de fabrication d'organes de maintien (4), une étape d'assemblage et de soudage des éléments de structure (3) entre-eux afin de fabriquer une caisse du véhicule, **caractérise en ce qu'**il comprend une étape de fabrication d'un moyen faisant entretoise (5), une étape de fabrication de modules de renfort (2, 4 ; 2) comportant au moins un organe de renfort (2), une étape de fabrication de modules de support (3, 5 ; 3, 4, 5), une étape d'assemblage isostatique des modules de renfort (2, 4 ; 2) et de support (3, 5 ; 3, 4, 5) entre-eux, et une étape d'assemblage hyperstatique des modules de renfort et de support entre-eux

2. Procédé selon la revendication précédente, **caractérisé en ce que** l'étape de fabrication du moyen faisant entretoise (5) consiste en une découpe d'une plaque de matière expansible sous l'effet de la chaleur de sorte que la matière passe d'un premier état solide ayant une faible épaisseur à un second état solide ayant une plus grande épaisseur.

3. Procédé selon l'une quelconque des revendications 1 et 2, **caractérisé en ce que** l'étape de fabrication d'un module de support consiste d'abord en une opération d'assemblage du moyen faisant entretoise (5) sur au moins un organe de maintien (4), puis en une opération d'assemblage de l'ensemble ainsi constitué dudit moyen faisant entretoise (5) et d'au moins un organe de maintien (4) sur les éléments de structure (3) de la caisse du véhicule (1).

4. Procédé selon l'une quelconque des revendications 1 à 3, **caractérisé en ce que** l'étape d'assemblage isostatique des modules de renfort et de support entre-eux consiste en une opération de montage de l'organe de renfort (2) sur le module de support (3, 4, 5) composé d'au moins l'un des éléments de structure (3), l'organe de maintien (4) et ledit moyen faisant entretoise (5), puis en une opération de liaison isostatique de l'organe de renfort (2) sur tout ou partie du module de support (3, 4, 5) consistant à souder une partie (2c) de l'organe de renfort (2) sur l'un des éléments de structure (3).

5. Procédé selon la revendication 4, **caractérisé en ce que** l'étape d'assemblage hyperstatique des modules de renfort (2) et de support (3, 4, 5) consiste à mettre en température, selon une gamme pré-établie, tout ou partie de la structure du véhicule (1) munie du module de renfort (2) assemblé sur le module de support (3, 4, 5), afin d'expandre ledit moyen faisant entretoise (5) au travers de jeux de montage présents entre l'organe de renfort (2) et l'organe de maintien (4), ledit moyen faisant entretoise (5) étant ainsi apte à créer une liaison encastrement entre l'organe de renfort (2) et l'organe de maintien (4).

6. Procédé selon l'une quelconque des revendications 1 et 2, **caractérisé en ce que** l'étape de fabrication de modules de renfort consiste en une opération d'assemblage entre au moins un organe de renfort (2) et un organe de maintien (4).

7. Procédé selon l'une quelconque des revendications 1, 2 et 6, **caractérisé en ce que** l'étape de fabrication d'un module de support consiste en une opération d'assemblage du moyen faisant entretoise (5) sur au moins un élément de structure (3).

8. Procédé selon l'une quelconque des revendications 1, 2, 6 et 7, **caractérisé en ce que** l'étape d'assemblage isostatique des modules de renfort et de support entre-eux consiste en une opération de montage du module de renfort (2, 4), composé de l'organe de renfort (2) et de l'organe de maintien (4), sur le module de support composé d'au moins un des éléments de structure (3) et dudit moyen faisant entretoise (5), puis en une opération de liaison isostatique du module de renfort (2, 4) sur le module de support (3, 5) consistant à souder une partie (2c) de l'organe de renfort (2) sur l'un des éléments de structure (3).

9. Procédé selon la revendication 8, **caractérisé en ce que** l'étape d'assemblage hyperstatique des modules de renfort (2, 4) et de support (3, 5) consiste à mettre en température, selon une gamme pré-établie, tout ou partie de la structure du véhicule (1) munie du module de renfort (2, 4) assemblé sur le module de support (3, 5), afin d'expandre ledit moyen faisant entretoise (5) au travers de jeux de montage présents entre l'élément de structure (3) et l'organe de maintien (4), ledit moyen faisant entretoise (5) étant ainsi apte à créer une liaison encastrement entre l'élément de structure (3) et l'organe de maintien (4).
